(19) Europäisches Patentamt / European Patent Office / Office européen des brevets

(11) **EP 3 405 760 B1**

(12) **EUROPEAN PATENT SPECIFICATION**

(45) Date of publication and mention
of the grant of the patent:
**06.11.2019 Bulletin 2019/45**

(51) Int Cl.:
**G01J 3/28** (2006.01)        **G01J 1/42** (2006.01)
**G01J 1/04** (2006.01)

(21) Application number: **17709474.5**

(22) Date of filing: **19.01.2017**

(86) International application number:
**PCT/IB2017/050289**

(87) International publication number:
**WO 2017/125876 (27.07.2017 Gazette 2017/30)**

(54) **HYPERSPECTRAL SENSOR WITH AMBIENT LIGHT DETECTOR**

HYPERSPEKTRALER DETEKOTR MIT UMGEBUNGSLICHTSENSOR

CAPTEUR HYPERSPECTRAL AVEC DETECTEUR THE ILLUMINATION AMBIENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2016 EP 16151974**

(43) Date of publication of application:
**28.11.2018 Bulletin 2018/48**

(73) Proprietors:
• **EOPTIS S.r.l.**
  **38121 Trento (IT)**
• **SAL Engineering S.r.l.**
  **41124 Modena (IT)**

(72) Inventors:
• **COVI, Daniele**
  **38123 Trento (IT)**
• **DUBBINI, Marco**
  **40033 Casalecchio di Reno (BO) (IT)**
• **GATTELLI, Mario**
  **48026 Russi (RA) (IT)**

(74) Representative: **Gallo, Luca et al**
**Gallo & Partners S.r.l.**
**Via Rezzonico, 6**
**35131 Padova (IT)**

(56) References cited:
**US-A1- 2005 151 965     US-A1- 2011 073 752
US-A1- 2014 022 381**

## Description

Field of application

The present invention relates to an apparatus for detecting reflectance by means of images.

The concerned apparatus pertains to the field of production of systems for detecting images adapted to acquire environmental information. In particular, the concerned apparatus can be used in the agricultural sector (e.g. for planning agronomical activities in precision agriculture, for mapping vegetation, for planning irrigation, for optimizing the use of pesticides and fertilizers, for monitoring the state of health of crops and for diagnosing potential diseases thereof), in the mapping and environmental monitoring sector (e.g. for mapping geological surfaces, for detecting spillage of polluting or hazardous materials, for mapping biomasses), in the industrial sector (e.g. for monitoring extended industrial plants, for chemical imaging detections), etc.

In particular, the apparatus makes it possible to obtain environmental information by detecting the reflectance of the surfaces of the shot elements.

Prior art

It is known, particularly in the agricultural sector, to shoot images of plantations in order to detect the state of health of the crops, for instance.

Such images are usually shot by means of apparatuses which comprise a vehicle (such as a remote-controlled drone, a piloted aircraft, a land vehicle, a boat etc.) carrying a camera mounted on it which is adapted to detect the light reflected by the shot surface.

In particular, the camera is of multi-spectral type and may be mounted on a movable pivoting support of the vehicle to compensate for the oscillations to which it is subject during motion.

As known, the multi-spectral camera comprises multiple image sensors adapted to shoot the same scene simultaneously, there being coupled with each of which an objective and a mono-band selective filter or a single image sensor, to which a lens and a multi-band selective filter is coupled. Each selective filter selects a given spectral band (in case of mono-band filter) or a series of spectral bands (in case of multi-band filter) of the electromagnetic radiation, so that each image sensor detects a spectral image of the scene in the spectral bands of the corresponding filter for each photograph.

If the image sensor is of the CCD/CMOS type using silicon-based technology, the spectral bands of the filters cover the entire visible and near infrared spectra (VIS-NIR indicatively 400nm-1000nm) as a whole, so that the spectrum of the scene shot by the camera is obtained by combining all the spectral images of each photograph pixel-on-pixel. By using sensors based on indium gallium arsenide (InGaAs) constructive technology, sensitivity may be extended in the SWIR region (900nm-2500nm) by maintaining the same configuration of selective filters as the wavelength treated above.

The reflected light measurements detected by the camera are used, generally in post-processing, to obtain the reflectance of the elements (plants, soil etc.) of the shot scene.

As known, the reflectance measurement is obtained as ratio, band by band, between the intensity of the reflected radiation and that of the incident radiation. In order to obtain an estimate of the incident radiation, it is known to provide a white color target (e.g. obtained with a panel of appropriate material or with appropriate coating, about one meter wide) at the elements to be shot, which target tends to reflect about 90-100% of the incident radiation on it on all bands, so that, when the camera also frames the white target, it acquires a reference image indicative of the incident radiation on the elements to be shot.

More in detail, assuming a transmittance of each selective filter equal to 100% of the corresponding spectral band $B_i$ and zero out of such band, and that in such spectral band $B_i$ the reflectivity of the scene assumes constant value, the luminosity value P of each pixel of each image sensor is given by the following ratio:

$$P = R_i \times F \times \int_{Bi} S \cdot T_i \cdot IL \cdot d\lambda = R_i \cdot K,$$

where:

$R_i(\lambda)$ [%] is the reflectance of the scene in the spectral band $B_i$;
$F$ [m$^2$] is the enlargement of the lenses of the objective, considering perfectly transparent lenses and ignoring spectrum alterations;
$T_L(\lambda)$ [%] is the transmittance of the selective filter;
$S(\lambda)$ [digital number/W] is the pixel sensitivity of the sensor (the operating parameters being fixed);
$IL(\lambda)$ [W/m$^2$/nm] is the spectral radiation of the incident light;
$\lambda$ [nm] is the wavelength.

The factor K is entirely independent from the shot scene and is as a function of the incident light only, the camera features being fixed (lens, filter, sensor).

By using the reflectance target $R_i'$ and detecting the luminous intensity value P' of the target itself by means of the multi-spectral camera, it is possible to calculate the reflectance $R_i$ of the scene for each spectral band $B_i$ by means of the following ratio:

$$R_i = R_i' \cdot P/P'.$$

The solution of known type briefly described above has been found to not be free from drawbacks in practice.

A first drawback is due to the fact the incident light, in particular in case of large area shoots, may vary from zone to zone, e.g. for the presence of clouds, and therefore the incident light in given zones may be different from that incident on the target, with consequent reflectance calculation errors.

Furthermore, the target is not always framed by the scene and, consequently, scene and target may be shot in different times, determining further reflectance calculation errors in dynamic light conditions.

A further drawback is due to the fact that it is normally necessary to avail of multiple targets of large size (e.g. 1 m²), placed at considerable distance from one another, with consequent high waste of time, in particular for detecting large areas with terrain which is hard to reach (such as farmed fields, woodland, etc.). In order to solve the aforesaid drawbacks at least in part, apparatuses have been introduced on the market in which a sensor of the multi-spectral camera (hereinafter named incident light sensor) is used to detect the radiation coming from the present light source (e.g. the sun) in order to acquire an incident radiation reference image (supposing that the radiation which strikes the vehicle is substantially equal to that which strikes the surface to be shot). In such conditions, the reflectance $R_i$ of the scene can be calculated for each spectral band $B_i$ by means of the following ratio:

$$R_i = P/P'',$$

where P" is the luminous intensity value detected by the incident light sensor.

For example, United States patent US 2014/0022381 describes a multi-spectral camera which comprises multiple image sensors provided with corresponding first selective filters and an incident light sensor, which is optically coupled with an optical assembly adapted to intercept the incident radiation and transmit it to the incident light sensor. Therefore, in this manner, the image sensor dedicated to detecting the incident light is derived from one of the image sensors of the multi-spectral camera.

More in detail, the aforesaid optical assembly (coupled to the incident light sensor) comprises an array of second selective filters having the same spectral bands as the selective filters of the image sensors and a translucent material cover arranged facing the second selective filters to uniform the directionality of the incident light.

Furthermore, multiple filiform optical fibers are provided, each of which has an inlet end resting on the corresponding second selective filter for receiving the radiation coming from the latter, and an outlet end coupled with the incident light sensor to project a radiation spot coming from the corresponding second selective filter on the incident light sensor.

The latter solution of known type has also been proven not free from drawbacks in practice.

A first drawback is due to the fact that the inlet end of each optical fiber has a light acceptance angle of about 60° and, therefore, also acquires luminous radiations which have not orthogonally crossed the corresponding second selective filter. The selective filters normally used are of the interference type, which can only filter with high sensitivity in the corresponding spectral band the radiation which strikes them orthogonally, while they allow the passage of other wavelengths for radiations which strike them with a different inclination. Therefore, the inlet end of each optical fiber, by letting in luminous rays in a wide acceptance angle, also acquires wavelengths external to the spectral band of the corresponding second selective filter, introducing a significant error in reflectance measurement. Although optical fibers with smaller acceptance angles exist, even of only 10°, they generally have a much smaller diameter (0.1 mm) and this implies a drastic reduction in terms of collected light intensity and a consequent very noisy signal on sensor level, thus making such optical fibers unsuited to detect the reflectance.

Another drawback is due to the fact that in order to connect the optical assembly to the incident light sensor (normally facing different directions and arranged in different zones of the aerial vehicle) the optical fibers are bent, implying a change of the radiation spectrum which crosses each optical fiber.

A further drawback is due to the fact that the radiation intercepted by the image sensors travels along an optical path given by objective, first selective filter and sensor, while the radiation intercepted by the incident light sensor travel along a different optical path given by translucent cover, second selective filter, optical fiber and sensor. The difference of the optical path between the radiation detected by the image sensors and that detected by the incident light sensor, due in particular to the interposition of the optical fiber between optical assembly and incident light sensor implies further errors in the calculation of the reflectance.

A further drawback is due to the fact that the optical fiber has a given rigidity and in particular a minimum curvature radius which may significantly obstruct the movement of the possible pivoting support on which the camera could be mounted and drastically reduce the capability of stabilizing the camera.

Furthermore, multi-spectral devices imaging light passed through a filter array with lenses on a sensor are known from Us2005/0151965 A1 and US2011/0073752 A1.

Presentation of the invention

It is thus the main object of the present invention to solve the drawbacks presented by the solutions of known type, by making available an apparatus for detecting reflectance by means of images which is operatively entirely efficient and reliable and which makes it possible to detect reflectance measurements with improved accuracy, minimizing in particular the reference signal calculation errors of the incident radiation.

It is another object of the present invention to make available an apparatus for detecting reflectance by means of images, by means of which the different spectral bands of the incident radiation for measuring the reference signals can be efficiently measured.

It is another object of the present invention to make available an apparatus for detecting reflectance by means of images, by means of which an optical path of the radiation intercepted by the multi-spectral camera, which is substantially identical to the optical path of the radiation intercepted by the incident light detection device, can be obtained.

It is another object of the present invention to make available an apparatus for detecting reflectance by means of images which is constructively simple to make, by means of which, in particular, the selective filters and the incident light detection device can be optically coupled in simple and cost-effective manner.

It is another object of the present invention to make available an apparatus for detecting reflectance by means of images, by means of which the incident light detection device can be connected to the multi-spectral camera in simple and reliable manner.

The above objects are achieved by a device with the features of claim 1. Favourable modifications are defined in the dependent claims.

Brief description of the drawings

The technical features of the invention according to the aforesaid objects are clearly inferable from the content of the following claims and the advantages of the same will be more apparent from the detailed description that follows made with reference to the appended drawings which illustrate an embodiment by way of non-limitative example only, in which:

- figure 1 diagrammatically shows an apparatus which is the object of the present invention related to a particular example of embodiment in which the apparatus is arranged on a drone aircraft;
- figure 2 diagrammatically shows a functional view of a multi-spectral camera and of an incident light optical detection device which is the object of the present invention;
- figure 3 is a perspective view of the optical detection device of the apparatus which is the object of the present invention;
- figure 4 shows an exploded view of the optical detection device shown in figure 3;
- figure 5 shows a section view of the optical detection device shown in figure 3 according to a section passing through the optical axis of the device itself.

Detailed description of a preferred embodiment

With reference to the accompanying drawings, reference numeral 1 indicates as a whole an apparatus for detecting reflectance by means of images, which is the object of the present invention.

The concerned apparatus 1 is intended to be advantageously used in various sectors (such as agriculture, mapping and environmental monitoring, industry etc.) to acquire environmental information related to a surface S of the elements the reflectance of which it is desired to detect (arranged for example on a given territory).

According to the present invention, the apparatus 1 comprises a camera 5, in particular multi-spectral, adapted to shoot the surface S.

Advantageously, the apparatus 1 comprises a bearing structure on which the camera 5 is mounted.

In particular, the aforesaid bearing structure comprises a vehicle 2 adapted to move at the surface S to be shot.

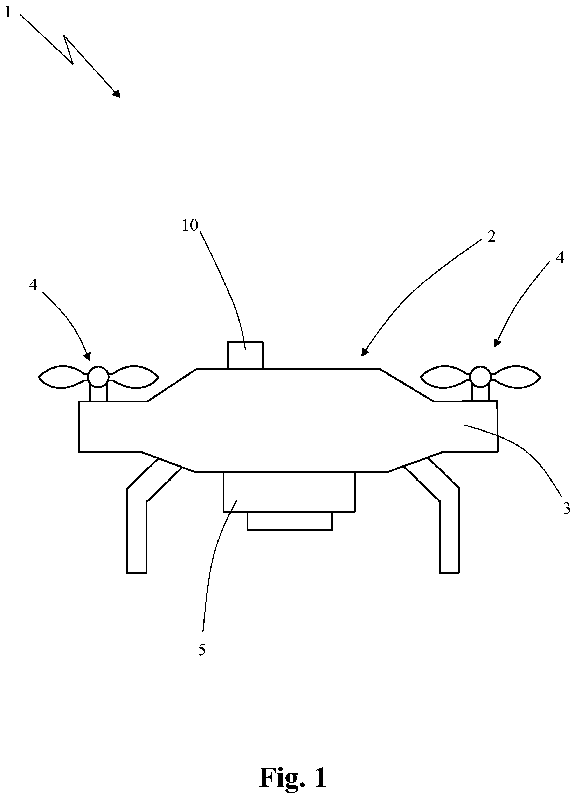

Advantageously, with reference to the particular example shown in figure 1, the vehicle 2 is an aerial vehicle which can be actuated to fly over the surface S to be shot (e.g. at an altitude of about 50-150 meters).

Preferably, the aerial vehicle is obtained by means of a drone remotely controlled, for example by means of radio control, by a user.

Obviously, without because of this departing from the scope of protection of the present invention, the vehicle 2 may also be any device capable of housing and/or transporting the camera 5, such as an aircraft, a helicopter, a land vehicle (such as a car, an off-road vehicle), a boat (as a boat, a dingy), etc.

Differently, the bearing structure may comprise a fixed structure, such as a supporting post, intended to be fixed at the elements of the surface S to be shot and carrying the camera 5 mounted on it.

According to the particular embodiment shown in figure 1, the aerial vehicle comprises a bearing structure 3 carrying flight lifting means 4, such a rotors, mounted on it.

Advantageously, the camera 5 is mounted on the bearing structure 3 of the aerial vehicle and is facing downwards when the latter is in flight.

In particular, the camera 5 is connected to the bearing structure 3 by means of a movable pivoting support (not shown and of the type known in itself) to compensate for the oscillations to which the aerial vehicle 2 is subjected when in flight.

The camera 5 of the apparatus 1 is adapted to take multiple photographs (e.g. while the vehicle 2 is in motion) to acquire multiple scenes of the surface S.

In particular, the camera 5, when it is mounted on the aerial vehicle, is adapted to shoot the surface S underneath during the flight of the vehicle aerial vehicle itself.

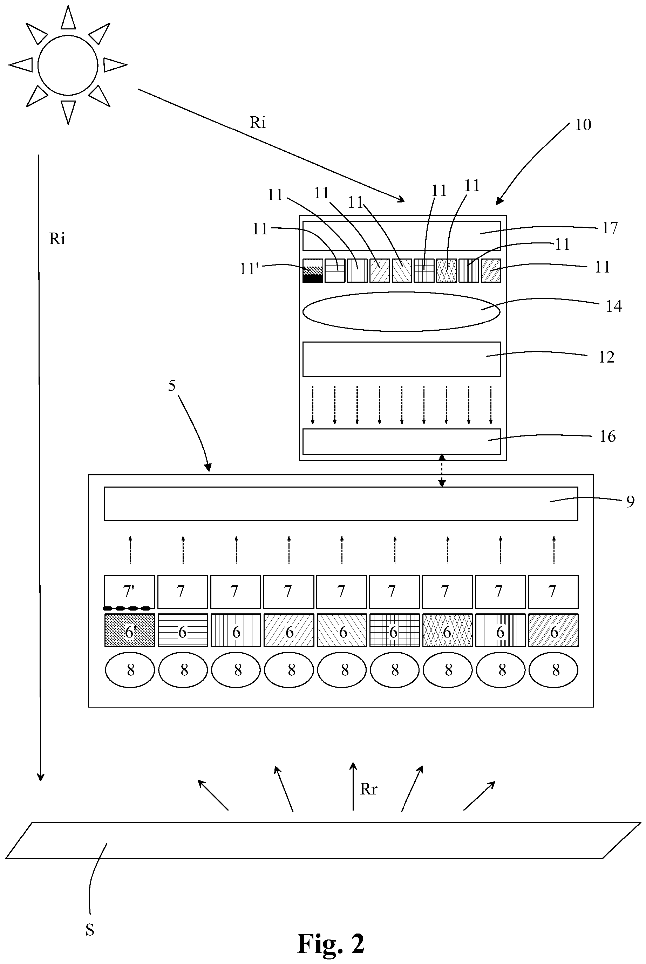

With reference to the diagram shown in figure 2, the camera 5 of the apparatus 1 is provided with multiple first selective filters 6, preferably of interferential type, adapted to intercept a reflected radiation Rr coming from the surface S.

More in detail, each of the first selector filters 6 is provided with a corresponding first spectral band to project a corresponding first filtered radiation having wavelength within the aforesaid first spectral band following the incidence of the reflected radiation Rr on it.

Furthermore, the camera 5 is provided with several first optical sensors 7, preferably of CMOS type, each of which is optically coupled with the corresponding first selective filter 6 for detecting the corresponding first filtered radiation and generating a corresponding measurement signal indicative of the luminous intensity of the reflected radiation of the scene shot in the corresponding first spectral band.

In this manner, in particular, each first optical sensor 7 detects, for each photograph, a spectral image of the scene in the first spectral band of the corresponding first selective filter 6.

Preferably, each first optical sensor 7 is an image sensor, having an acquisition surface provided with a given pixel matrix.

Advantageously, the first spectral bands of the first selective filters 6 cover, as a whole, the entire visible spectrum and the near infrared, so that, the spectrum of the scene shot by the camera 5 is obtained by combining all the spectral images of each photograph pixel-on-pixel.

In particular, the first selective filters 6 are of the passband type, for example, with the following corresponding first spectral bands: 395-450 nm, 455-520 nm, 525-575 nm, 580-625 nm, 630-690, 705-745 nm, 750-820 nm, 825-950 nm. Preferably, the camera 5 comprises a further optical sensor 7', which is provided with a layer of colored pigments deposited on the acquisition surface of such further optical sensor 7' according to a mosaicing that spatially alternates on the various pixels filters which transmit in the red, green and blue regions (RGB), e.g. according to the so-called Bayer Pattern (which is used as standard technique for generating color images by means of a sensor of monochromatic nature). In such case, a further first filter 6', which is coupled to the aforesaid further optical sensor 7' and is adapted to remove the infrared radiation (in particular, indicatively over 700 nm, with an exact value which depends on the specific type of the further optical sensor 7') is advantageously provided for a correct reconstruction of the chromaticism of the image.

Appropriately, the camera 5 comprises multiple optical objectives 8, each of which is optically coupled with the corresponding first optical sensor 7, 7' and is arranged in particular in front of the corresponding first selective filter 6. Advantageously, the apparatus 1 comprises a control and storage unit 9 connected to the first optical sensors 7 of the camera 5 to control the operation of such first optical sensors 7 and store the measuring signals generated thereby.

In particular, according to a particular embodiment, the storage and control unit 9 is integrated in the camera 5.

The apparatus 1 comprises an optical detection device 10 of the incident radiation Ri advantageously mounted on the vehicle 2, in particular on the bearing structure 3 of the latter and adapted to detect the incident radiation Ri coming from a radiating source, such as, for example, the sun, and/or atmospheric elements (such as clouds), and/or environmental elements (such as mountains) adapted to reflect the light on the surface S.

In this manner, the apparatus 1 can acquire a reference image of the incident radiation Ri (supposing that the radiation that strikes the optical detection device 10 is substantially equal to that which strikes the surface S to be shot) to use for calculating the reflectance of the scenes shot by the camera 5, as will be explained in detail below.

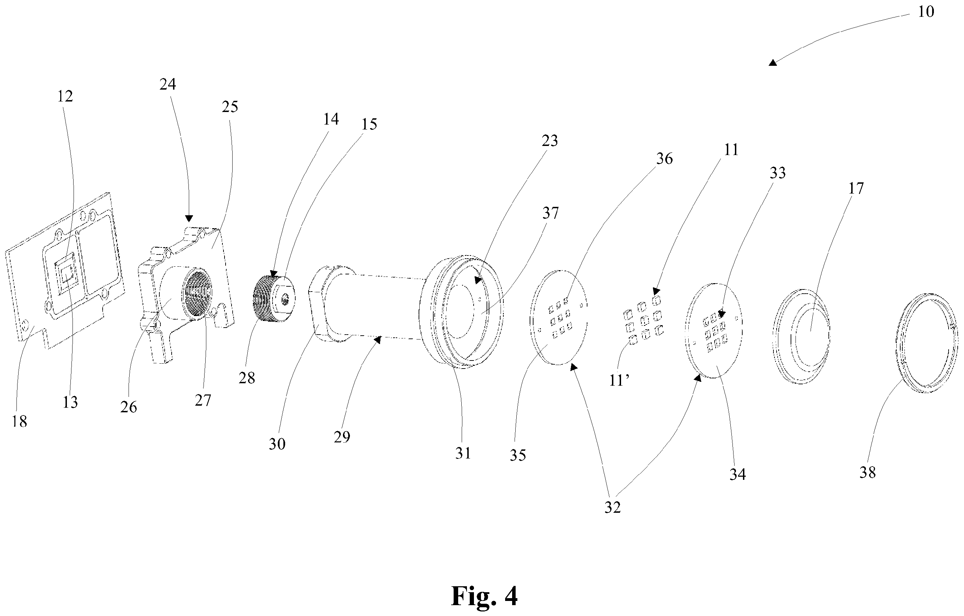

With reference to figures 2-5, the optical detection device 10 comprises multiple selective filters 11, preferably of the interference type, each of which is provided with a second spectral band substantially equal to the first spectral band of the corresponding first selective filter 6 of the camera 5.

In particular, similarly to the first selective filters 6, the second selective filters 11 are of the passband type, for example, with the following corresponding second spectral bands: 395-450 nm, 455-520 nm, 525-575 nm, 580-625 nm, 630-690, 705-745 nm, 750-820 nm, 825-950 nm.

Preferably, the optical detection device 10 comprises a further second filter 11' provided with three distinct filtering elements, which reproduce the three distinct filtering elements, which reproduce the red, green and blue pigments, deposited on the acquisition surface of a further optical sensor 7', net of the infrared component.

Each of the second selective filters 11 is arranged to receive the incident radiation Ri coming from the radiating source and consequently emitting a corresponding filtered radiation having wavelengths within the corresponding second spectral band.

Furthermore, the optical detection device 10 comprises a second optical sensor 12, preferably of CMOS type, optically coupled with the second selective filters 11 and provided with a sensitive surface 13 adapted to receive the second filtered radiations coming from all the second selective filters 11 to generate corresponding indicative reference signals, for each second spectral band, of the luminous intensity of the incident radiation Ri.

Such reference signals make it possible to calculate, for each spectral band, the reflectance of the shot scene as ratio, for each pixel, between the luminous intensity of the measuring signal (detected by the camera 5) and the luminous intensity of the corresponding reference signal (detected by the optical detection device 10).

Preferably, the second optical sensor 12 is an image sensor, having its sensitive surface 13 provided with a pixel matrix.

Advantageously, the optical detection device 10 comprises a control unit 16 connected to the second optical sensor 12 to receive the reference signal generated by the latter and preferably to control the operation of the second optical sensor 12 itself.

Advantageously, the control unit 16 is connected to the storage and control unit 9 of the camera 5 to send the reference signals generated by the second optical sensor 12 to the latter. According to a different embodiment, the control unit 16 is provided with an internal storage module of its own to store the reference signals.

Advantageously, the control unit 16 of the optical detection device 10 is provided with synchronization means with the camera 5 to associate the corresponding measuring signal related to images acquired in the same instance by the optical detection device 10 and by the camera 5 with each reference signal.

For example, the aforesaid synchronization means comprise a timing module which can be periodically synchronized with a corresponding timing module of the camera 5, or otherwise an operative module adapted to exchange synchronization signals between the control unit 16 of the optical detection device 10 and the storage and control unit 9 of the camera 5, in particular by means of wired or wireless interface.

Preferably, the apparatus 1 comprises a calculation unit adapted to receive the measuring signal and the reference signals for calculating the reflectance values of each scene shot by the camera 5.

According to a particular embodiment, the calculation unit is remote with respect to the aerial vehicle 2 and comprises, for example, a computer provided with a calculation program. Advantageously, according to this embodiment, the apparatus 1 comprises a transmission unit mounted on the aerial vehicle 2 and operatively connected to the storage and control unit 9 and/or to the control unit 16 to transmit the measurement and reference signals to the calculating unit. In particular, the transmission unit comprises a communication interface (for example USB, mSata, SDIO, or other) provided with communication ports which can be connected to storage supports (such as data flash drives, removable memory cards, mSata modules, hard disks or other) in which the signals are transferred to the storage and control unit 9 and/or the control unit 16 to be able to then transfer them physically to the calculation unit. Otherwise, the transmission unit comprises a wireless (e.g. radiofrequency) transmission module intended to communicate with a corresponding wireless transmission device of the control unit.

Preferably, the control unit 16 of the optical detection device 10 is electrically connected to the camera 5, and in particular to the storage and control unit 9, in order to send to it the reference signals and/or receive the synchronization and/or feeding signals from the camera 5.

Appropriately, the configuration of the apparatus 1 according to the invention requires at most an electrical connection between the optical detection device 10 and the camera 5, which can be obtained by simply arranging electrical connections without arranging mechanical optical connections, with consequent construction and manufacturing simplification of the apparatus 1 itself. Advantageously, the optical detection device 10, when it is mounted on the aerial vehicle, it is oriented in opposite sense with respect to the camera 5, so that the optical detection device 10 faces upwards to intercept the incident radiation Ri coming from the radiating source when the aerial vehicle is in flight. Preferably, the second optical sensor 12 of the optical detection device 10 faces the opposite sense with respect to the first optical sensors 7 of the camera 5.

According to the basic idea of the present invention, the optical detection device 10 comprising a lenticular focusing optical system 14, which is interposed between the second selective filters 11 and the second optical sensor 12 and is provided with an optical axis X intercepted by the sensitive surface 13 of the second optical sensor 12 itself.

The lenticular optical system 14 is arranged to project the rays of the second filtered radiations, coming from the second selective filters 11, onto the sensitive surface 13 of the second optical sensor 12, in order to allow the latter to acquire the aforesaid reference signals.

Operatively, the lenticular optical system 14 projects the second filtered radiations coming from each second selective filter 11 in a corresponding detection area of the sensitive surface 13 of the second optical sensor 12, so as to form multiple distinct detection areas on the sensitive surface 13, each of which area receives the second filtered radiation coming from the corresponding the second selective filter 11 to detect the luminous intensity of each aforesaid second filtered radiation, which luminous intensity is encoded in the corresponding reference signals.

Preferably, the calculation unit of the apparatus 1 or the control unit 16 of the detection device 10 calculates the average value of the luminous intensity of each detection area of the sensitive surface 13 of the second optical sensor 12, so that the calculation unit uses such average values as reference values to calculate the reflectance of each scene in the corresponding spectral band.

Advantageously, the lenticular optical system 14 comprises one or more lenses, in particular a series of lenses, optically coupled to one another and arranged in mutual succession along the optical axis X, so that each lens projects an incident radiation on it towards the next lens.

Preferably, the lenticular optical system 14 comprises a mounting 15, preferably substantially tubular, carrying the series of lenses fixed to it.

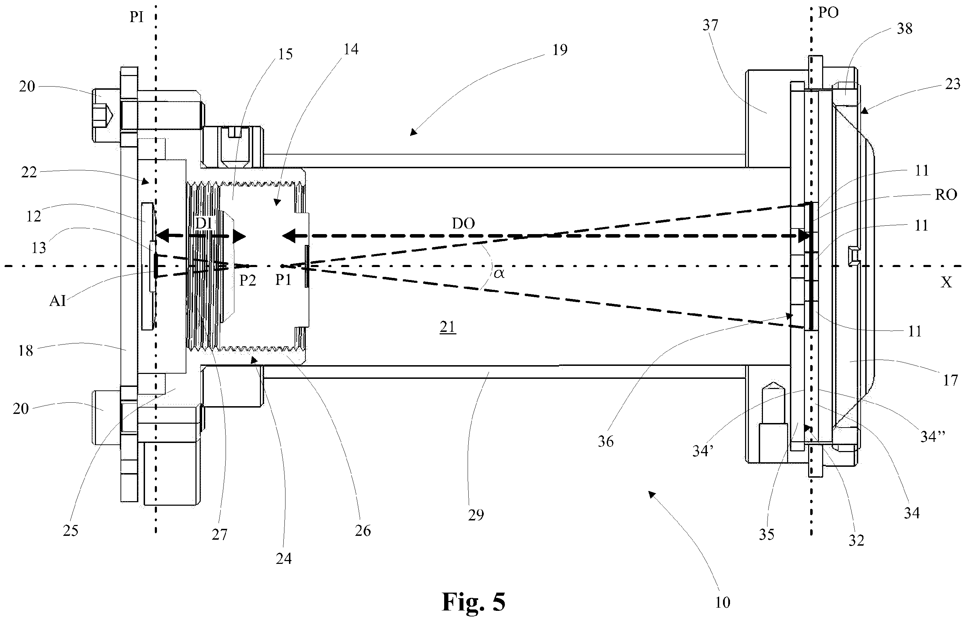

Advantageously, with reference to figure 5, the second selective filters 11 lay substantially on an object plane PO substantially orthogonal to the optical axis X of the lenticular optical system 14, and are arranged side-by-side on such object plane PO, preferably according to a quadrangular matrix.

Advantageously, each second selective filter 11 is provided with an inlet surface, intended to be struck by the incident radiation, and an outlet surface, facing towards the lenticular optical system 14 and from which the second filtered radiation is intended to be projected. In particular, the inlet surface and the outlet surface of each second selective filter 11 are orthogonal to the optical axis X of the lenticular optical system 14.

Preferably, the inlet surface and the outlet surface of each second selective filter 11 mutually define the thickness of the latter, which thickness is peripherally delimited by a side surface substantially orthogonal to the inlet and outlet surfaces themselves.

Advantageously, the sensitive surface 13 of the second optical sensor 12 is arranged on an image plane PI which is substantially orthogonal to the optical axis X of the lenticular optical system 14, and in particular is parallel to the object plane PO of the second selective filters 11.

The lenticular optical system 14 is arranged to focus the image of the second selective filters 11 on the image plane PI of the second optical sensor 12, so that the second filtered radiation coming from each second selective filter 11 is projected on the sensitive surface 13 of the second optical sensor 12 forming, in the corresponding detection area, a corresponding reference image clearly distinct from the other reference images of the other second selective filters 11, so as to prevent partial superimposing of the reference images in the sensitive surface 13.

Advantageously, the second selective filters 11 delimit a region RO, preferably quadrangular, symmetrically centered with respect to the optical axis X of the lenticular optical system 14, on the object plane PO. Such region RO subtends a projection angle $\alpha$ smaller than about 20° and preferably symmetric with respect to the optical axis X of the lenticular optical system 14 itself within the lenticular optical system field angle 14.

Advantageously, with reference to the example in figure 5, the lenticular optical system 14 is provided with a first main point PI arranged on the object side (facing towards the second selective filters 11) and of a second main point P2 arranged on the image side (facing towards the second optical sensor 12). Preferably, the first main point P1 of the lenticular optical system 14 is placed at an object distance DO (along optical axis X) of the object plane PO of the second selective filters 11 equal to at least four times the maximum extension of the region RO of the second selective filters 11 on such object plane PO. For example, considering the region RO of the second selective filters 11 of quadrangular shape with greater side equal to about 9 mm, the object distance DO between the first main point P1 of the lenticular optical system 14 and the object plane PO is about 45-50 mm.

Advantageously, in this manner, the lenticular optical system 14 substantially intercepts (and projects on the sensitive surface 13 of the second optical sensor 12) exclusively the rays of the second filtered radiations substantially orthogonal to the object plane PO of the second selective filters 11.

In particular, "substantially orthogonal" means that the rays with inclination with respect to the optical axis X are not higher than about 10°.

Such feature is very important because each second selective filter 11, preferably of interference type, can guarantee the filtering of the incident radiation in the corresponding second spectral band only for the rays for such radiations which are substantially orthogonal to the inlet surface of the second selective filter 11 itself. More in detail, the second selective filters 11 filter only the rays of the radiations substantially perpendicular to their inlet surfaces in their arranged second spectral bands, while the rays of the radiations which differ substantially from the normal of the inlet surface of the second selective filters 11 are filtered in different spectral bands which differ from the aforesaid second spectral bands, thus also letting through radiations with external wavelengths corresponding to the second spectral bands of the second selective filters 11. Substantially, each second selective filter 11 lets out the radiation within the corresponding second spectral band only when the rays of such radiations are substantially orthogonal to the inlet surface of the second selective filter 11 itself, while for rays which are significantly inclined with respect to the normal of the inlet surface, the second selective filter 11 lets through radiations having wavelength also external to the corresponding second spectral band.

Therefore, arranging the lenticular optical system 14 according to the present invention, which intercepts the rays of the second filtered radiations substantially orthogonal to the object plane PO of the second selective filters 11, makes it possible to project exclusively the second filtered radiations in the second spectral bands on the sensitive surface 13 of the second optical sensor 12, thus guaranteeing a significant optimization of the intensity measurement of such radiations, and thus of the reflectance calculation.

Advantageously, according to a first particular embodiment, the lenticular optical system 14 is of the telecentric type. In such case, the lenticular optical system 14 can substantially project on the sensitive surface 13 of the second optical sensor 12 exclusively the rays of the second filtered radiations substantially orthogonal to the object plane PO of the second selective filters 11, also without the aforesaid arrangement of the object distance DO between the first main point P1 of the lenticular optical system 14 and the object plane PO.

Advantageously, the object distance DO between the first main point P1 of the lenticular optical system 14 and the object plane PO (where the second selective filters 11 is located) is greater than an image distance DI between the second main point P2 of the lenticular optical system 14 and the image plane PI (where the sensitive surface 13 of the second optical sensor 12 is located).

In this manner, the lenticular optical system 14 is arranged to project an image of the second selective filters 11 which is smaller than the real dimensions of the second selective filters 11 themselves on the sensitive surface 13 of the second optical sensor 12.

More in detail, the lenticular optical system 14 projects the second filtered radiations coming from the second selective filters 11 in an image area AI of the sensitive surface 13 of the second optical sensor 12 which is the smallest of the region RO occupied by the second selective filters 11 on the object plane PO. This makes it possible to use second selective filters 11 of overall larger size than the sensitive surface 13 of the second optical sensor 12, with a consequent significant simplification of construction of the apparatus 1, and in particular of the second selective filters 11.

For example, second selective filters 11 can be arranged, each of which 4 mm$^2$ in size, which occupy together an area of the object plane PO of about 100 mm$^2$, using at the same time only partially the sensitive surface of the second optical sensor of about 17 mm$^2$ (3.6 mm × 4.8 mm) in size, without requiring an excessive miniaturization of the second selective filters 11 with consequent constructive simplification of the latter.

The optical detection device 10 comprises an optical diffuser 17, preferably of Lambertian type, which is positioned in front of the second selective filters 11 to intercept the incident radiation Ri and is arranged to project the incident radiation Ri towards the second selective filters 11 themselves with substantially diffused directionality.

In particular, the optical diffuser 17 comprises a translucent white color body which is susceptible of being crossed by the incident radiations Ri by projecting radiations which are diffused in homogeneous manner in all directions with wavelengths covering the entire spectrum concerned by the second spectrum bands of the second selective filters 11 towards the second selective filters 11. Advantageously, in this manner, the optical diffuser 17 makes it possible to eliminate the directionality of the incident radiation Ri of the radiating source, so that the direction of the incident radiation Ri which reaches the second selective filters 11 is independent from the inclination of the rays of the radiating source, and thus of the position of the latter with respect to the horizon.

Furthermore, the white color optical diffuser 17 makes it possible to create a reference image which is detected by the optical detection device 10 to generate the reference signals for calculating reflectance.

Advantageously, the first optical sensors 7 of the camera 5 are of the same type as the second optical sensor 12 of the optical detection device 10, displaying the same functional parameters, such as sensitivity to radiations, gain etc. Furthermore, the optical objectives 8 of the camera 5 display the same optical properties as the lenticular optical system 14 of the optical detection device 10. Furthermore, each first selective filter 6 of the camera 5 displays the same optical properties as the second selective filter 11 having equal spectral band. Advantageously, in this manner, the reflected radiation Rr detected by the camera 5 follows substantially the same optical path as the incident radiation Ri detected by the optical detection device 10. Therefore, the measurement signal values (detected by the camera 5) and the reference signal values (detected by the optical detection device 10) are influenced by the same factors related to the optical path, which factors, in the reflectance calculation, are compensated in the ratio between measurement signal and reference signal, without influencing the calculated reflectance value. In particular, the advantageous presence of the optical diffuser 17 in the optical path requires the knowledge of the transmittance features of the optical diffuser 17 itself in the second spectral bands to be able to correctly intercept the reference signal values indicative of the luminosity of the incident radiation Ri.

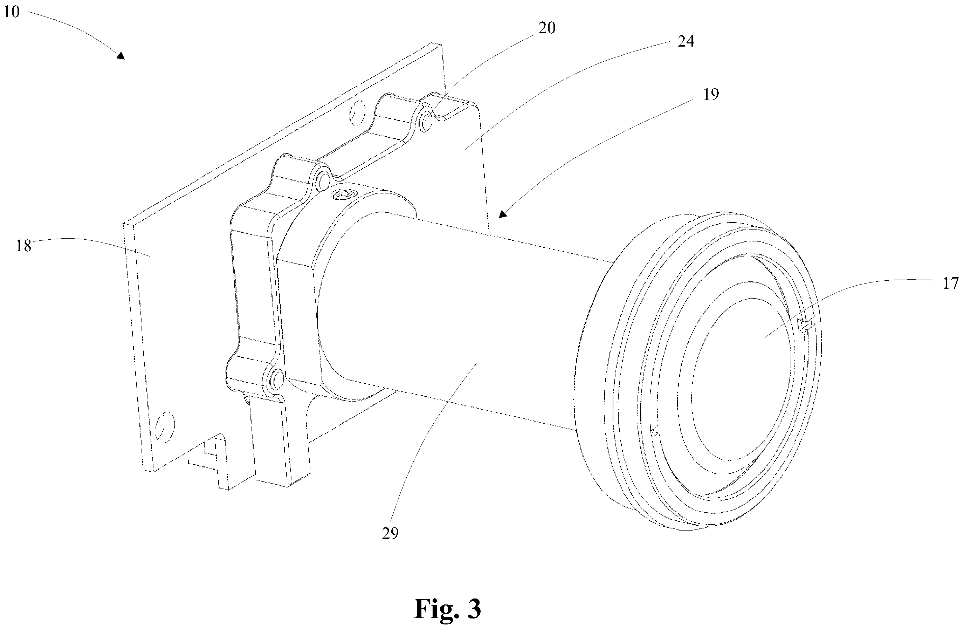

Furthermore, with reference to figures 3-5, the optical detection device 10 comprises a supporting body 18 carrying the second optical sensor 12 mounted on it. In particular, the supporting body 18 comprises a printed circuit and is preferably provided with electrical connections, e.g. obtained by metallic tracks, placed to electrically connect the second optical sensor 12 to the control unit 16 of the optical detection device 10.

The optical detection device 10 also comprises a projection body 19 fixed to the supporting body 18, e.g. by means of fixing screws 20, and provided with an optical channel 21 which houses the lenticular optical system 14 therein. Such optical channel 21 extends parallel to the optical axis X between a first opening 22, at which the second optical sensor 12 is arranged, and a second opening 23, at which the second selective filters 11 and preferably the optical diffuser 17 are arranged.

Preferably, the supporting body 18 is placed to close the first opening 22 of the optical channel 21 with the second optical sensor 12 which faces such first opening 22 to receive the radiations coming from the lenticular optical system 14.

Advantageously, the projection body 19 of the optical detection device 10 comprises a coupling portion 24 to which the lenticular optical system 14 is fixed in adjustable manner along the optical axis X.

In particular, such coupling portion 24 is provided with a connection base 25 fixed to the supporting body 18 and at which the first opening 22 of the optical channel 21 is obtained. Furthermore, the coupling portion 24 is provided with an engagement part 26, which develops protruding from the connection base 25 and has substantially annular shape defining therein a stretch of the optical channel 21 in which the lenticular optical system 14 is arranged.

Advantageously, the coupling portion 24 is provided with a threaded inner surface 27 extending about the optical axis X and obtained, in particular, on an inner wall of the engagement part 26 of the coupling portion 24 itself. The lenticular optical system 14 is provided with an outer surface 28, also threaded, extending about the optical axis X and obtained, in particular, on an outer side walls of the frame 15 of the lenticular optical system 14 itself.

The outer surface 28 of the lenticular optical system 14 is coupled by screwing to the inner surface 27 of the coupling portion 24 with screwing axis parallel to the optical axis X, so that by screwing or unscrewing the mounting 15 of the lenticular optical system 14 with respect to the coupling portion 24, it is possible to modify the position of the lenticular optical system 14 along the optical axis X, varying the distance from the second optical sensor 12 and from the second selective filters 11.

The projection body 19 of the optical detection device 10 comprises a tubular portion 29 extending along the optical axis X between a first end 30, in which the engagement part 26 of the coupling portion 24 is inserted, and a second end 31, at which the second opening 23 of the optical channel 21 is provided.

The optical detection device 10 comprises a supporting element 32 fixed to the projection body 19 and provided with multiple first through holes 33 in which the corresponding second selective filters 11 are inserted.

In particular, the supporting element 32 comprises a bearing body 34, which is substantially plate-shaped and provided with a first face 34', oriented towards the lenticular optical systebearing body 34m 14, and a second face 34" oriented towards the optical diffuser 17. The bearing body 34 is provided with the aforesaid first through holes 33 which develop between the first face 34' and the second face 34" of the bearing body 34 itself, and substantially house to size the corresponding second selective filters 11.

Advantageously, the thickness of the supporting body 34 (between its two faces 34', 34") greater than or equal to the thickness of the second selective filters 11 and is made of opaque material, so as to prevent the passage of radiations laterally through the side surfaces of the second selective filters 11, preventing the radiations which cross each second selective filter 11 from intercepting the other second selective filters 11.

Preferably, the supporting element 32 comprises a locking body 35, made of opaque material, in particular substantially plate-shaped, which is placed resting on the first face 34' of the bearing body 34 and is provided with second through holes 36 aligned with the corresponding first through holes 33 of the bearing body 34 to allow the passage of second filtered radiations let out from the corresponding second selective filters 11.

The length of the second through holes 36 of the locking body 35 is shorter than that of the first through holes 33 of the bearing body 34, so that the outlet face of each second selective filter 11 rests at the end of the latter on the locking body 35. The optical diffuser 17 is arranged resting on the second face 34" of the bearing body 34, so as to retain the second selective filters 11 in the first through holes 33, between the locking body 35 and the optical diffuser 17 itself.

The projection body 19 of the optical detection device 10 is provided with an abutment flange 37 arranged about the second opening 23 of the optical channel 21, in particular at the second end 31 of the tubular portion 29 of the projection body 19 itself.

The aforesaid abutment flange 37 restingly receives the supporting element 32 and in particular the locking body 35 of the latter.

Advantageously, the bearing body 34, the locking body 35 and the abutment flange 37 are provided with corresponding alignment holes placed in the same relative position on these three elements. Pins (not shown in the accompanying figures) are inserted in such alignment holes, which allow the correct alignment and orientation between the bearing body 34, the locking body 35 and the abutment flange 37 during the step of assembling.

The supporting element 32 restingly receives, in turn, the optical diffuser 17, in particular on the second face 34' of the bearing body 34.

The optical detection device 10 comprises a retaining ring 38 fixed to the projection body 19 and acting in abutment on the optical diffuser 17 to retain the optical diffuser 17 and the supporting element 32 integral with the projection body 19, maintaining the supporting element 32 abutting on the abutment flange 37.

In particular, the retaining ring 38 is engaged within an annular groove obtained on the inner surface of the optical channel 21, abutting on the optical diffuser 17, so as to retain it resting on the second face 34' of the bearing body 34 of the supporting element 32.

The invention thus described therefore reaches the set objects.

**Claims**

1. An apparatus (1) for detecting reflectance by means of images, which apparatus (1) comprises:

   - at least one camera (5) adapted to shoot a surface (S) and provided with:

       - multiple first selective filters (6), each of which is provided with a corresponding first spectral band for intercepting a reflected radiation (Rr) coming from said surface (S) and emitting a corresponding first filtered radiation in said first spectral band;
       - multiple first optical sensors (7), each of which is optically coupled with the corresponding said first selective filter (6) to detect the corresponding said first filtered radiation and generate a corresponding measurement signal;

- an optical detection device (10) comprising:

- multiple second selective filters (11), each of which is provided with a corresponding second spectral band substantially equal to the first spectral band of the corresponding said first selective filter (6), and is arranged to receive an incident radiation (Ri) from an irradiating source and to emit a corresponding second filtered radiation within said second spectral band;

- a second optical sensor (12) optically coupled to said second selective filters (11) and provided with a sensitive surface (13) adapted to receive the second filtered radiations coming from said second selective filters (11) to generate corresponding reference signals;

said apparatus (1) being **characterized in that** said optical reference device (10) comprises:

- a lenticular focusing optical system (14), which is interposed between said second selective filters (11) and said second optical sensor (12), is provided with an optical axis (X) intercepted by the sensitive surface (13) of said second optical sensor (12), and is arranged to project the ray of the second filtered radiations coming from said second selective filters (11) onto the sensitive surface (13) of said second optical sensor (12);

- an optical diffuser (17) placed in front of said second selective filters (11) to intercept said incident radiation (Ri) and arranged to project said incident radiation (Ri) towards said second selective filters (11) with substantially diffused directionality;

- a supporting body (18) carrying said second optical sensor (12) mounted on it;

- a projection body (19) fixed to said supporting body (18) and provided with an optical channel (21), which houses inside said lenticular optical system (14) and extends parallel to said optical axis (X) between a first opening (22), at which said second optical sensor (12) is arranged, and a second opening (23), at which said second selective filters (11) are arranged;

- a supporting element (32) provided with multiple first through holes (33) in which said corresponding second selective filters (11) are inserted;

wherein said projection body (19) is provided with an abutment flange (37) arranged about the second opening (23) of said optical channel (21), which abutment flange (37) restingly receives said supporting element (32) which restingly receives said optical diffuser (17), said optical detection device (10) comprising a retaining ring (38) fixed to said projection body (19) and abutting on said optical diffuser (17) to retain said optical diffuser (17) and said supporting element (32) integral with said projection body (19).

2. An apparatus (1) according to claim 1, **characterized in that** said second selective filters (11) lay substantially on an object plane (PO) substantially orthogonal to the optical axis (X) of said lenticular optical system (14).

3. An apparatus (1) according to any one of the preceding claims, **characterized in that** the sensitive area (13) of said second optical sensor (12) is arranged on an image plane (PI) substantially orthogonal to the optical axis (X) of said lenticular optical system (14), which is arranged to focus the image of said second selective filters (11) substantially on said image plane (PI).

4. An apparatus (1) according to any one of the preceding claims, **characterized in that** said optical diffuser (17) is a Lambertian diffuser.

5. An apparatus (1) according to any one of the preceding claims, **characterized in that** said first selective filters (6) and said second selective filters (11) are interference filters.

6. An apparatus (1) according to any one of the preceding claims, **characterized in that** said second optical sensor (12) is provided in opposite sense with respect to said first optical sensors (7).

7. An apparatus (1) according to any one of the preceding claims, **characterized in that** said lenticular optical system (14) is provided with a first main point (P1) and with a second main point P2, said first main point (P1) being positioned, along said optical axis (X), at an object distance (DO) from said second selective filters (11) greater by an image distance (DI) between said second main point (P2) and said second optical sensor (12).

8. An apparatus (1) according to any one of the preceding claims, **characterized in that** said projection body (19) comprises a coupling portion (24) to which said lenticular optical system (14) is fixed in adjustable manner along said optical axis (X).

9. An apparatus (1) according to claim 8, **characterized in that** said coupling portion (24) is provided with a threaded inner surface (27) extending about said optical axis (X), and said lenticular optical system (14) is provided with a threaded outer surface (28) extending about said optical axis (X) and coupled by screwing to said inner surface (27).

**10.** An apparatus (1) according to any one of the preceding claims, **characterized in that** it comprises a movable vehicle (2), on which said camera (5) and said optical detection device (10) are mounted.

**Patentansprüche**

**1.** Vorrichtung (1) zum Erfassen von Reflexion mittels Bildern, wobei die Vorrichtung (1) Folgendes umfasst:

- mindestens eine Kamera (5), die geeignet ist, eine Oberfläche (S) zu fotografieren und mit Folgendem ausgestattet ist:
- zahlreichen Selektivfiltern (6), von denen jeder mit einem entsprechenden ersten Spektralband zum Abfangen einer von der genannten Oberfläche (S) kommenden reflektierten Strahlung (Rr) und Emittieren einer entsprechenden ersten gefilterten Strahlung in dem genannten ersten Spektralband ausgestattet ist;
- zahlreichen ersten optischen Sensoren (7), von denen jeder optisch mit dem entsprechenden ersten Selektivfilter (6) gekoppelt ist, um die entsprechende genannte erst gefilterte Strahlung zu erfassen und ein entsprechendes Messsignal zu erzeugen;
- ein optisches Detektionsgerät (10), umfassend:

- zahlreiche zweite Selektivfilter (11), von denen jeder mit einem im Wesentlichen dem ersten Spektralband des entsprechenden ersten Selektivfilters (6) gleichen entsprechenden zweiten Spektralband ausgestattet ist, das so angeordnet ist, dass es eine einfallende Strahlung (Ri) von einer Strahlenquelle empfängt und eine entsprechende zweite gefilterte Strahlung in dem genannten zweiten Spektralband emittiert;
- ein optisch mit den genannten zweiten Selektivfiltern (11) gekoppelter zweiter optischer Sensor (12), der mit einer empfindlichen Oberfläche (13) ausgestattet und geeignet ist, die zweiten gefilterten Strahlungen von den genannten zweiten Selektivfiltern (11) zu empfangen, um entsprechende Bezugssignale zu erzeugen;

wobei diese Vorrichtung (1) **dadurch gekennzeichnet ist, dass** das genannte optische Referenzgerät Folgendes umfasst:

- ein linsenförmiges fokussierendes optisches System (14), das zwischen den genannten zweiten Selektivfiltern (11) und dem genannten zweiten optischen Sensor (12) angeordnet, mit einer optischen Achse (X) versehen, die von der empfindlichen Oberfläche (13) des genannten zweiten optischen Sensors (12) geschnitten wird, und so angeordnet ist, dass es den Strahl der zweiten gefilterten Strahlungen von den genannten zweiten Selektivfiltern (11) auf die empfindliche Oberfläche (13) des genannten zweiten optischen Sensors (12) projiziert;
- einen vor den genannten zweiten Selektivfiltern (11) platzierten optischen Strahler (17) zum Abfangen der genannten einfallenden Strahlung (Ri), der so angeordnet ist, dass die genannte einfallende Strahlung (Ri) in im Wesentlichen diffuser Richtung zu den genannten zweiten Selektivfiltern (11) projiziert wird;
- einen Trägerkörper (18), der den darauf montierten zweiten optischen Sensor (12) trägt;
- einen an dem Trägerkörper (18) angebrachten Projektionskörper (19), der mit einem optischen Kanal (21) ausgestattet ist, in dem das genannte linsenförmige optische System (14) untergebracht ist und der parallel zu der genannten optischen Achse (X) zwischen einer ersten Öffnung (22), an der der genannte zweite optische Sensor (12) angeordnet ist, und einer zweiten Öffnung (23), an der die genannten zweiten Selektivfilter (11) angeordnet sind, verläuft;
- ein mit zahlreichen ersten Durchgangsöffnungen (33) ausgestattetes Trägerelement (32), in die die entsprechenden zweiten Selektivfilter (11) eingesetzt sind;

wobei der genannte Projektionskörper (19) mit einem um die genannte zweite Öffnung (23) des genannten optischen Kanals (21) angeordneten Anschlagflansch (37) ausgestattet ist und dieser Anschlagflansch (37) ruhend das genannte Trägerelement (32) aufnimmt, das ruhend den genannten optischen Strahler (17) aufnimmt, wobei das genannte optische Detektionsgerät (10) einen an dem genannten Projektionskörper (19) befestigten Haltering (38) umfasst, der an dem genannten optischen Strahler (17) anschlägt, um den genannten optischen Strahler (17) zurückzuhalten und das genannte Trägerelement (32) fest mit dem genannten Projektionskörper (19) verbunden ist.

**2.** Vorrichtung (1) nach Anspruch 1, **dadurch gekennzeichnet, dass** die genannten zweiten Selektivfilter (11) im Wesentlichen in einer im Wesentlichen zu der optischen Achse (X) des genannten linsenförmigen optischen System (14) rechtwinkligen Objektebene (PO) liegen.

**3.** Vorrichtung (1) nach einem beliebigen der vorangegangenen Ansprüche, **dadurch gekennzeichnet, dass** der empfindliche Bereich (13) des genannten zweiten optischen Sensors (12) in einer im Wesentlichen zu der optischen Achse (X) des genannten linsenförmigen optischen Systems (14) rechtwinkligen Bildebene (PI) angeordnet ist, das so angeordnet ist, dass das Bild der genannten zweiten Selektivfilter (11) im Wesentlichen in der genannten Bildebene (PI) fokussiert wird.

4. Vorrichtung (1) nach einem beliebigen der vorangegangenen Ansprüche, **dadurch gekennzeichnet, dass** der genannte optische Strahler (17) ein Lambertscher Strahler ist.

5. Vorrichtung (1) nach einem beliebigen der vorangegangenen Ansprüche, **dadurch gekennzeichnet, dass** die genannten ersten Selektivfilter (6) und die genannten zweiten Selektivfilter (11) Interferenzfilter sind.

6. Vorrichtung (1) nach einem beliebigen der vorangegangenen Ansprüche, **dadurch gekennzeichnet, dass** der genannte zweite optische Sensor (12) im Vergleich zu dem genannten ersten optischen Sensor (7) in entgegengesetzte Richtung zeigt.

7. Vorrichtung (1) nach einem beliebigen der vorangegangenen Ansprüche, **dadurch gekennzeichnet, dass** das genannte linsenförmige optische System (14) mit einem ersten Hauptpunkt (P1) und mit einem zweiten Hauptpunkt (P2) ausgestattet ist, wobei der erste Hauptpunkt (P1) entlang der genannten optischen Achse (X) in einem Objektabstand (DO) von den genannten zweiten Selektivfiltern (11) angeordnet ist, der um einen Bildabstand (DI) zwischen dem genannten zweiten Hauptpunkt (P2) und dem genannten zweiten optischen Sensor (12) größer ist.

8. Vorrichtung (1) nach einem beliebigen der vorangegangenen Ansprüche, **dadurch gekennzeichnet, dass** der genannte Projektionskörper (19) einen Kupplungsabschnitt (24) umfasst, an dem das genannte linsenförmige optische System (14) auf verstellbare Weise entlang der genannten optischen Achse (X) befestigt ist.

9. Vorrichtung (1) nach Anspruch 8, **dadurch gekennzeichnet, dass** der genannte Kupplungsabschnitt (24) mit einer Innenfläche mit Gewinde (27) ausgestattet ist, die über die genannte optische Achse (X) hinaus verläuft, und das genannte linsenförmige optische System (14) mit einer Außenfläche mit Gewinde (28) ausgestattet ist, die über die genannte optische Achse (X) hinaus verläuft und durch Verschrauben mit der genannten Innenfläche (27) gekoppelt ist.

10. Vorrichtung (1) nach einem beliebigen der vorangegangenen Ansprüche, **dadurch gekennzeichnet, dass** er einen beweglichen Träger (2) umfasst, auf dem die genannte Kamera (5) und das genannte optische Detektionsgerät (10) montiert sind.

## Revendications

1. Appareil (1) destiné à la détection de la réflectance au moyen d'images, l'appareil comprenant :

   - au moins une caméra (5) destinée à filmer une surface (S) et munie de :

      - plusieurs premiers filtres sélectifs (6), chacun présentant une première bande spectrale correspondante pour intercepter le rayonnement réfléchi (Rr) venant de ladite surface (S) et émettre un premier rayonnement filtré correspondant dans ladite première bande spectrale ;
      - plusieurs premiers capteurs optiques (7), chacun étant optiquement couplé au premier filtre sélectif (6) respectif pour détecter ledit premier rayonnement filtré respectif et générer un signal de mesure correspondant ;

   - un dispositif de détection optique (10) comprenant :

      - plusieurs deuxièmes filtres sélectifs (11), chacun présentant une deuxième bande spectrale correspondante essentiellement égale à la première bande spectrale du premier filtre sélectif (6) correspondant, et étant disposé pour recevoir un rayonnement incident (Ri) venant d'une source irradiante et émettre un deuxième rayonnement filtré correspondant dans ladite deuxième bande spectrale ;
      - un deuxième capteur optique (12) optiquement couplé auxdits deuxièmes filtres sélectifs (11) et muni d'une surface sensible (13) destinée à recevoir les deuxièmes rayonnements filtrés venant des deuxièmes filtres sélectifs (11) pour générer des signaux de référence correspondants ;

   ledit appareil étant **caractérisé en ce que** ledit dispositif de détection optique (10) comprend :

      - un système lenticulaire de focalisation optique (14), qui est interposé entre lesdits deuxièmes filtres sélectifs (11) et ledit deuxième capteur optique (12), est muni d'un axe optique (X) intercepté par la surface sensible (13) dudit deuxième capteur optique (12) et est disposé pour projeter le rayon des deuxièmes rayonnements filtrés venant desdits deuxièmes filtres sélectifs (11) sur la surface sensible (13) dudit deuxième capteur optique (12) ;

- un diffuseur optique (17) placé devant lesdits deuxièmes filtres sélectifs (11) pour intercepter ledit rayonnement incident (Ri) et disposé pour projeter ledit rayonnement incident (Ri) vers lesdits deuxièmes filtres sélectifs (11) avec une directionnalité essentiellement diffusée ;

- un corps de support (18) portant ledit deuxième capteur optique (12) ;

- un corps de projection (19) fixé sur ledit corps de support (18) et muni d'un canal optique (21), qui réceptionne ledit système lenticulaire optique (14) et s'étend parallèlement audit axe optique (X) entre une première ouverture (22), où se trouve ledit deuxième capteur optique (12) et une deuxième ouverture (23) où se trouvent lesdits deuxièmes filtres sélectifs (11) ;

- un élément de support (32) muni de plusieurs premiers trous (33), dans lesquels sont insérés lesdits deuxièmes filtres sélectifs (11) respectifs ;

où ledit corps de projection (19) est muni d'une bride d'appui (37) disposée autour de la deuxième ouverture (23) dudit canal optique (21), la bride d'appui (37) recevant ledit élément de support (32), qui reçoit, en appui, ledit diffuseur optique (17), ledit dispositif de détection optique (10) comprenant un anneau de rétention (38) fixé audit corps de projection (19) et allant en butée contre ledit diffuseur optique (17) pour retenir ledit diffuseur optique (17) et ledit élément de support (32) solidaires avec ledit corps de projection (19).

2. Appareil (1) selon la revendication 1, **caractérisé en ce que** lesdits deuxièmes filtres sélectifs (11) reposent essentiellement sur un plan d'objet (PO) essentiellement orthogonal à l'axe optique (X) dudit système optique lenticulaire (14).

3. Appareil (1) selon l'une quelconque des revendications précédentes, **caractérisé en ce que** la surface sensible (13) dudit deuxième capteur optique (12) est disposée sur un plan d'image (PI) essentiellement orthogonal à l'axe optique (X) dudit système optique lenticulaire (14), qui est disposé pour focaliser l'image desdits deuxièmes filtres sélectifs (11) essentiellement sur ledit plan d'image (PI).

4. Appareil (1) selon l'une quelconque des revendications précédentes, **caractérisé en ce que** ledit diffuseur optique (17) est un diffuseur lambertien.

5. Appareil (1) selon l'une quelconque des revendications précédentes, **caractérisé en ce que** lesdits premiers filtres sélectifs (6) et lesdits deuxièmes filtres sélectifs (11) sont des filtres d'interférence.

6. Appareil (1) selon l'une quelconque des revendications précédentes, **caractérisé en ce que** ledit deuxième capteur optique (12) est prévu en sens opposé par rapport auxdits premiers capteurs optiques (7).

7. Appareil (1) selon l'une quelconque des revendications précédentes, **caractérisé en ce que** ledit système optique lenticulaire (14) est muni d'un premier point principal (P1) et d'un deuxième point principal (P2), ledit premier point principal (P1) étant positionné, le long dudit axe optique (X), à une distance d'objet (DO) desdits deuxièmes filtres sélectifs (11) plus grande d'une distance d'image (DI) entre ledit deuxième point principal (P2) et ledit deuxième capteur optique (12).

8. Appareil (1) selon l'une quelconque des revendications précédentes, **caractérisé en ce que** ledit corps de projection (19) comprend une partie de couplage (24) sur laquelle est fixé le système optique lenticulaire (14) de manière ajustable le long dudit axe optique (X).

9. Appareil (1) selon la revendication 8, **caractérisé en ce que** ladite partie de couplage (24) est munie d'une surface intérieure filetée (27) s'étendant autour dudit axe optique (X), et ledit système optique lenticulaire (14) est muni d'une surface extérieure filetée (28) s'étendant autour dudit axe optique (X) et couplée par vissage à ladite surface intérieure (27).

10. Appareil (1) selon l'une quelconque des revendications précédentes, **caractérisé en ce qu'**il comprend un véhicule mobile (2) sur lequel sont montés ladite caméra (5) et ledit dispositif de détection optique (10).

**Fig. 1**

**Fig. 2**

**Fig. 3**

EP 3 405 760 B1

**Fig. 4**

**Fig. 5**

EP 3 405 760 B1

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140022381 A
- US 20050151965 A1
- US 20110073752 A1